# EUROPEAN PATENT SPECIFICATION

(11) **EP 0 635 204 B1**
(45) Date of publication and mention of the grant of the patent: **07.04.1999**
(21) Application number: 94202043.9
(22) Date of filing: 14.07.1994
(51) Int. Cl.: A01J 7/00, A01K 1/12

(54) **A construction for automatically milking animals**
Vorrichtung zum automatischen Melken von Tieren
Dispositif de traite automatique d'animaux

(30) Priority: 19.07.1993 NL 9301262
(43) Date of publication of application: 25.01.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- DE-A- 3 702 465
- FR-A- 2 298 943
- FR-A- 2 561 866

## Description

The present invention relates to a construction for automatically milking animals, such as cows, comprising a space where the animals are allowed to move about freely and a movable milking robot.

Such construction is known from DE-A-37 02 465.

In a construction of the above type, the animals are allowed to move about freely. In the event that the animals are allowed to move about freely, a difficulty is that the animals have to be lured to a milk box for being milked.

Especially in the beginning when the animals are not used to a milking robot, the animals have difficulties in finding the milk box.

The objective of the invention is to obviate this drawback or to reduce it for the greater part.

Therefore, the construction according to the invention comprises a number of resting boxes which also serve as milking parlour, and the movable milking robot is disposed relocatably to the resting boxes and is capable of automatically milking an animal at choice, while the construction furthermore comprises a detection device suitable for deciding whether an animal to be milked is standing or lying. Consequently, the animals are allowed to move freely in the construction, whereas they can be milked on the spot by the movable milking robot.

In order to prevent the animal from moving away from the milking robot during automatic milking, the conaccording to the invention comprises a positioning construction which is designed such that it enables the animal-to-be-milked to be arranged in the midst of the positioning construction and that it obstructs any sideward as well as any rearward movement of the animal.

According to another feature of the invention, the construction comprises a computer and process control system, through which the milking robot is automatically moved to an animal to be milked. According to the invention, in the computer memory a record of the times when the animals have been milked by the milking robot is kept up to date, while, on account of these data and by means of the process computer, the milking robot is automatically moved to an animal milked by the milking robot the longest time ago. Thus it is achieved that an animal belonging to the herd is not milked twice within a short space of time, which would be bad for the animal's health. In addition, it offers the advantage that the milking robot can be put into service where necessary, enabling a larger group of animals to be milked efficiently than would be the case when the milking robot always milks a random animal belonging to the dairy herd.

According to yet another feature of the invention, the milking robot is movable along a robot line which is provided in the shed.

According to a further feature of the invention, the robot line comprises a beam mounted above and near the front of the resting boxes in the shed. According to the invention, a concentrates dispensing system and signalling means are provided in the vicinity of the resting boxes which also serve as milking parlour. By dropping concentrates into the feed troughs by means of the concentrates dispensing system, it is possible to stimulate the animals to assume the appropriate position and attitude in the resting box so as to allow milking by means of the milking robot.

To enable milking to take place under hygienic conditions, a manure channel for manure removal is provided near the rear side of the resting boxes, while on the shed floor there is provided a cross conveyor serving to carry off manure to the manure channel as well as a longitudinal conveyor serving to remove manure from the manure channel in one direction to a receptacle.

To elucidate the invention, an exemplary embodiment of the invention will now be further explained with reference to the accompanying drawings, in which:
Figure 1 is a plan view of a shed comprising two rows of resting boxes;
Figure 2 is a cross-section of the shed taken along the line II-II in Figure 1, where each row of resting boxes is provided with a milking robot and a concentrates dispensing system;
Figure 3 is a cross-sectional view of a resting box and a milking robot taken along the line III-III in Figure 1;
Figure 4 is a rear view of the resting box, as indicated by the arrow IV in Figure 3;
Figure 5 shows a plan view of a plurality of resting boxes, as indicated by the arrow V in Figure 3;
Figure 6 is a side view of a cross conveyor for the removal of manure, as indicated by the arrow VI in Figure 1;
Figure 7 is a plan view of the cross conveyor for the removal of manure, as indicated by the arrow VII in Figure 6 and
Figure 8 shows enlarged a longitudinal conveyor for the removal of manure in the manure channel of Figure 1.

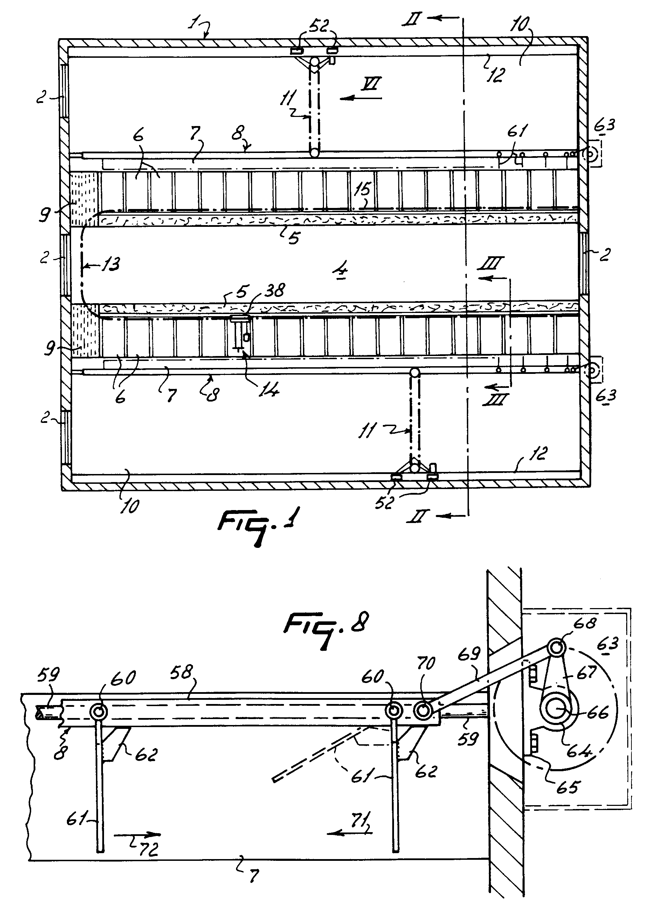

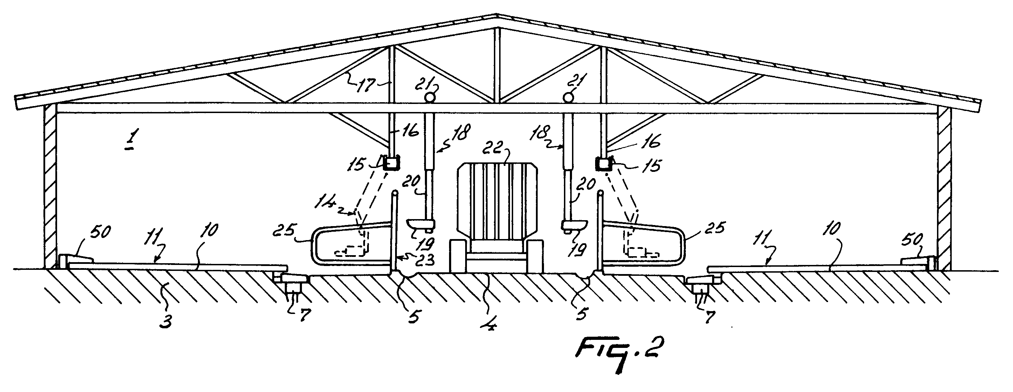

In Figure 1, the plan view shows a shed 1 provided with doors 2 and a floor 3. A feeding passage 4 with, on either side, a long feed trough 5 (Figure 2) extending over the full shed length is centrally arranged in the cow shed 1. On either side of the feeding passage 4 there is provided a row of resting boxes which may be used as places for the animals to rest, to be milked and to be fed. As is shown in Figures 1 and 2, at the rear side of each row of resting boxes 6 there is provided a manure channel 7 equipped with a conveyor 8 capable of removing unidirectionally the manure present in the manure channel 7. On one end of each row of resting boxes 6 is a receptacle 9 to store the manure removed by the longitudinal conveyor 8. The receptacle 9 has a connection with a manure storage pit - not shown. Behind each row of resting boxes there is also a loafing passage 10, on which the animals are allowed to move about freely. The floor 3 of the loafing passages 10 and the resting boxes 6 are inclined slightly downward in the direction of the manure channels 7. The angle of inclination of the floor 3 is preferably 1 to 2°. The floor is treated with a coating which prevents ammonia or ammonia-containing substances from penetrating into the floor 3.

Arranged transversely to each loafing passage 10, a cross conveyor 11 is to remove any manure and/or urine from the loafing passage 10 into the manure channel 7. The cross conveyor 11 is capable of travelling to and fro in the longitudinal direction of the shed 1 on a rail 12 installed near either outer wall of the shed 1.

In the shed 1, there is also provided a U-shaped robot line 13, along which a milking robot 14 is movable. The legs of the U-shaped robot line 13 extend along the front side of the resting boxes 6. As is indicated in Figure 2, the robot line 13 comprises a beam 15 fastened to the roof truss 17 of the shed 1 by means of supports 16. The beam 15 is suspended about two metres from the floor 3. Furthermore, near the front of each resting box 6, there is provided a concentrates feeding system 18, through which the animals having taken their places in resting boxes 6 can be individually given concentrates, such as pellets. The concentrates feeding system 18 comprises for each resting box a feed trough 19 arranged on a "periscope-like" telescoping tube 20. The telescoping tubes 20 are attached to the roof truss 17 and connected to a supply line 21 for the supply of concentrated-feed pellets from a storage room - not shown. The "periscope-like" telescoping tube 20 is capable of moving each feed trough vertically and of pivoting each feed trough 19 on a vertical shaft. For depositing roughage in the long feed troughs 5, e.g. by means of a silage waggon 22, the feed troughs may be temporarily raised, so as that not to interfere with the supply of roughage into the long feed troughs 5.

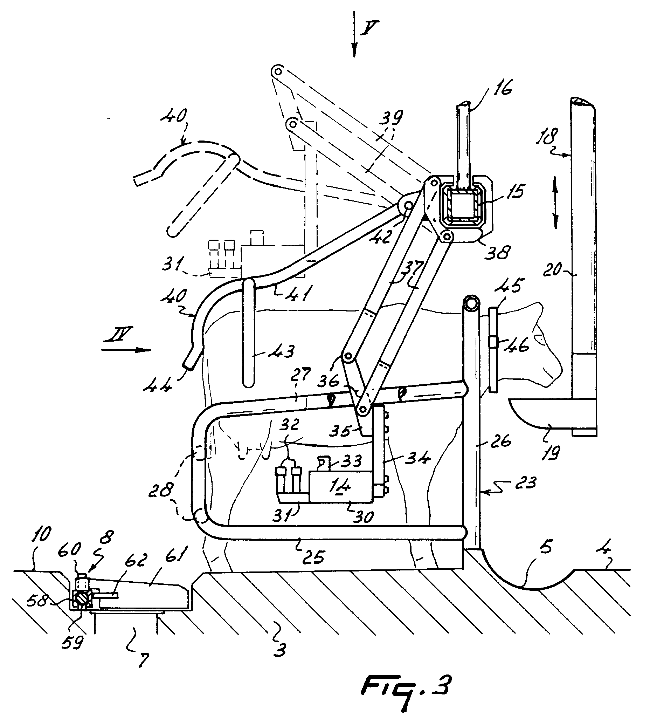

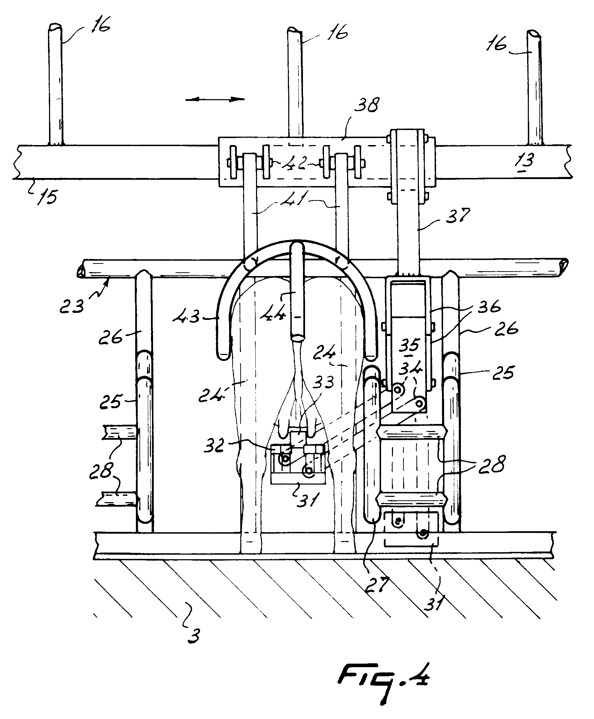

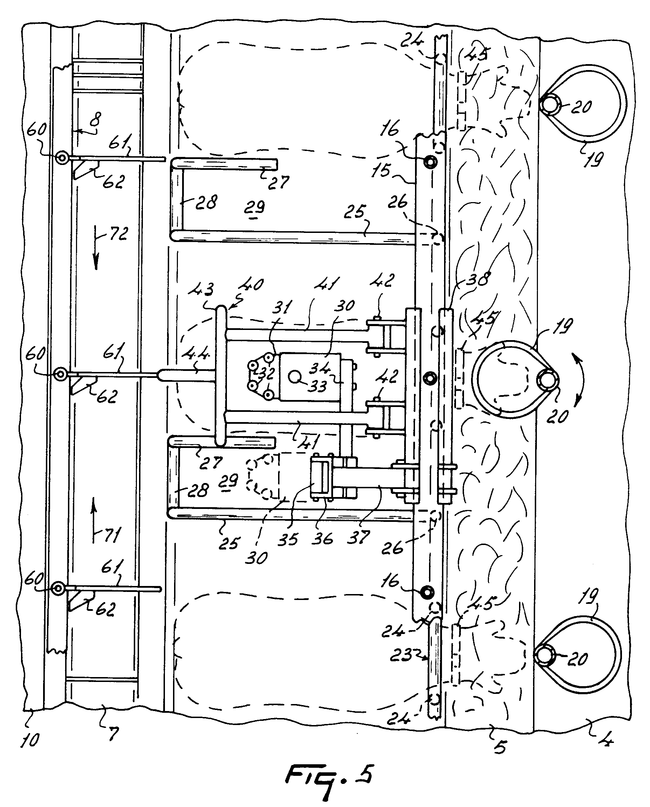

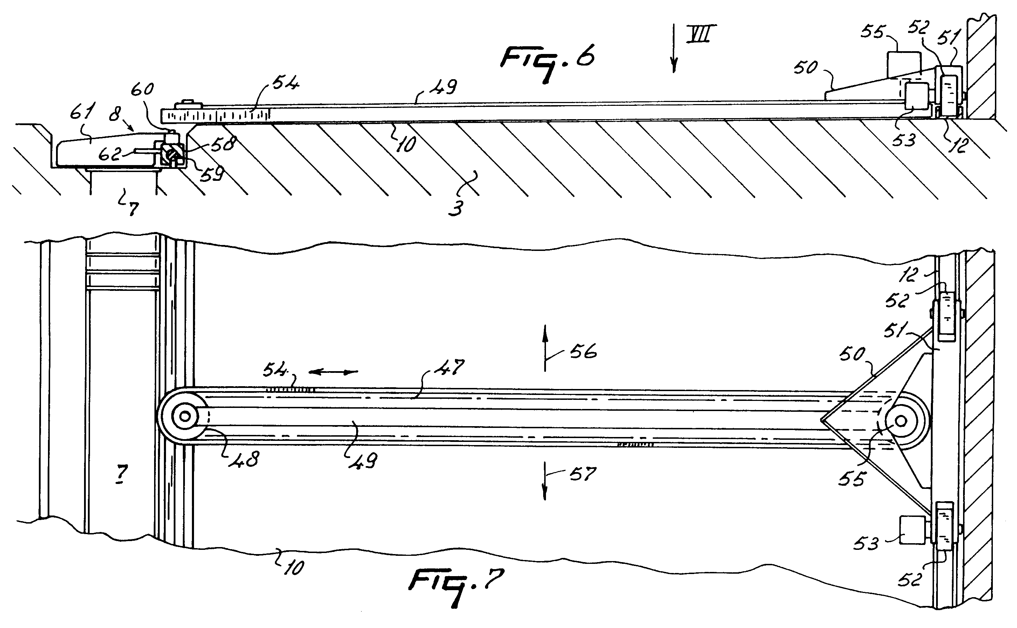

Figures 3 - 5 show in detail in which way the milking robot 14 milks the cows in the resting box(es) 6. Each resting box 6 comprises a rectangular tubular frame 23, which constitutes the front of a resting box 6. Two vertical tubes 24 are arranged at a certain distance from each other near the centre of the tubular frame 23 in such a way that the interspace allows the head of an animal to reach a long feed trough 5 and a feed trough 19. Each resting box 6 also comprises two U-shaped side walls 25 which connect with the posts 26 of the tubular frame 23. Near the end, a second U-shaped frame 27 mounted on one of the U-shaped side walls 25 of a resting box 6 by means of two horizontal connecting rods 28, is disposed at a certain distance from and parallel to the U-shaped side wall 25. The second U-shaped frame 27 extends from the rear side of the resting box 6 to approximately halfway the resting box 6. In the space 29 (Figure 5) thus created by the parallel frames 25 and 27, the milking robot 14 is allowed to swivel in a vertical plane, without causing there any trouble to an animal which has taken its place in a relevant resting box 6. As is reflected in Figure 3, the milking robot 14 comprises a robot arm 30 having on its end a robot head 31 equipped with teat cups 32. In addition, the robot head 31 comprises a detection sensor 33 which enables to determine e.g. the positions of the teats of an animal to be milked. The robot head 31 is capable of being moved in a horizontal plane by means of a first quadrangular hinge mechanism 34, one end of which is connected to the robot arm 30 and the other end to a supporting plate 35. Furthermore, the supporting plate 35 is provided with two lugs 36 connected with the arms of a second quadrangular hinge mechanism 37. The other end of the second quadrangular hinge mechanism 37 is connected with a U-shaped sleeve 38 slidable on the beam 15 of the robot line 13. The milking robot 14 can swivel in a vertical plane by means of the second quadrangular hinge mechanism 37, so that in the event that the milking robot 14 is moved along the beam 14 to a certain resting box 6, the milking robot 14 is capable of being swivelled upwards by means of the quadrangular hinge mechanism 37, as is indicated by dashed lines 39 in Figure 3. When the relevant resting box 6 has been reached, the milking robot 14 can be swivelled in the space 29 of a milking box 6 by means of the second quadrangular hinge mechanism 37, whereupon the robot head 31 can be swivelled, by means of the first quadrangular hinge mechanism, to a position under the udder of an animal to be milked. The positions of the teats are determined by means of the detection sensor 33, whereupon the teat cups are automatically connected to the teats of the animal concerned.

On the sleeve 38, next to the milking robot 14, there is provided a positioning construction 40, by means of which an animal in a resting box 6 is restricted in its freedom of motion both in rearward and in sideward direction. The positioning construction 40 comprises two arms 41 which are disposed on the sleeve 38, rotatably mounted on a horizontal shaft 42. The two arms 41 are at a certain distance from each other and their ends are interconnected by an arc-shaped brace 43 which, in a rear view of a resting box 6, extends transversely to the longitudinal direction of the resting box 6. The arc-shaped brace 43 has a diameter which roughly corresponds with the width of a full-grown cow. Near the centre of the arc-shaped brace 43, a bent tube 44 extending obliquely rearwards and downwards in the longitudinal direction of the resting box 6 is provided and, when the cow has been positioned, is in contact with the rear part of the animal. The brace 43 and the tube 44 thus constitute a tripod positioning construction which is pivotable in a vertical plane on the horizontal shafts 42. During the milking robot 14 motion along the robot line 13, both the milking robot 14 and the positioning construction 40 are swung up.

The operation of the above-described construction will be explained below.

Every animal present in the shed 1 is provided with a collar 45 bearing a transmitter 46, by means of which transmitter the identity of the relevant cow can be transmitted to a computer - not shown - provided with a cow recognition system. Through the computer it is recorded which animal has been milked at a certain time by means of the milking robot 14 and how much time has lapsed since then. On the basis of the time elapsed since a milking, the computer can determine which animal in the herd was milked the longest time ago. If the relevant animal is in a resting box 6, it will be attempted to milk the animal by means of the milking robot 14. In the event that the relevant animal is in a resting box 6, the milking robot 14 is moved along the robot line 13 to the respective resting box 6, and the animal is limited in its freedom of motion in the resting box by means of the tripod positioning construction 40. At the same time or subsequently, the feed trough 19 arranged near the front of the relevant resting box 6 is turned to the animal (Figure 5) and the animal is given a predetermined amount of concentrated feed by the concentrates dispensing system. Subsequently, the milking robot 14 is swung down from the raised position and the milking robot head 31 is moved to underneath the animal, whereupon the teat cups 32 can be connected to the teats. Subsequently, automatic milking can start, while the teat cups are disconnected on completion of the milking and the milking robot 14 is again put into the raised position then. Subsequently, the positioning construction 40 is also swung up and the feed trough 19 is turned away from the animal. After this, the milking robot 14 can be moved along the robot line to an other animal to be milked.

If the animal is not in a position appropriate for milking in a resting box 6 - which means that the animal, for instance, lies in the resting box 6 or is in the vicinity of the resting box 6 -, then the feed trough 19 is put into position by means of the concentrates dispensing system 18 and concentrated feed is thrown into the feed trough 19. Because the throwing of concentrates into the feed trough 19 is accompanied by noise, this will usually be noticed by the animal, whereupon the animal will get up and go to the feed trough 19 where the animal can subsequently be milked. If an animal remains lying in the resting box 6 after concentrated feed has been supplied through the concentrates dispensing system 18, the animal can be stimulated to get up by touching the animal with the positioning construction 40.

In the Figures 6 and 7, the cross conveyor 11 of Figure 1 is shown enlarged and more detailed. The cross conveyor 11 covers the full width of the loafing area in the cow-shed 1, while one end of the cross conveyor 11 projects above the manure channel 7. The cross conveyor 11 comprises a looped chain 47 which is mounted on gearwheels 48 at the two ends of the cross conveyor 11 (Figure 7). The two gearwheels 48 are interconnected by an intermediate beam 49, of which one end is connected with a V-shaped frame 50. The two legs of the V-shaped frame 50 are interconnected by a horizontal U-shaped strip 51, whose both ends are provided with roller pair members 52, by means of which the cross conveyor 11 can be moved to and fro along the rail 12 in the longitudinal direction of the shed 1. For this purpose, one roller member 52 is driven by a motor 53, which is an electric motor in the exemplary embodiment of the invention. The chain 47 has on its bottom side bristles 54 which bear on the floor 3 of the loafing area in the shed 1. Through the gearwheel 48 situated near the V-shaped frame 50, the chain 47 is driven by a second motor 55 which is also in the form of an electric motor.

If the cross conveyor 11 is moved in the direction indicated by arrow 56 in Figure 7, the second electric motor 55 drives the chain 47 counter-clockwise, so that the manure and/or other dirt present on the floor 3 of the loafing area in the shed 1 is carried off in the direction of the manure channel 7. When the cross conveyor has reached the end of the shed 1, the electric motor 53 is automatically changed over, so that the cross conveyor 11 moves in the opposite direction, as is indicated by arrow 57 in Figure 7. The first electric motor 53 is simultaneously changed over, so that the chain 47, too, is turned clockwise instead of counter-clockwise, so that also in the event that the cross conveyor 11 is moved in the direction of arrow 57 the manure is carried into the manure channel 7.

In Figure 8, the longitudinal conveyor 8 of Figure 1 is shown enlarged and more detailed. The longitudinal conveyor 8 comprises a U-shaped frame beam 58 slidably mounted on a rail 59 which is placed on the bottom of the U-shaped manure channel 7 and extends along a side wall of this manure channel 7. On the U-shaped frame beam 58 and at a certain mutual distance there are provided two upright shafts 60 with bearing-mounted rotatable carriers 61 around them. On one side, the carriers 61 are provided with a stop 62 which can bear on the side of the U-shaped frame beam 58. In the exemplary embodiment of the invention, the carriers are made of steel and on their bottom side they are provided with a rubber strip bearing on the bottom of the manure channel 7. It will be obvious that the carriers 61 may also be completely made of plastic or metal or any other type of material.

Arranged near an end of the U-shaped beam 58 there is an eccentric drive 63, by means of which the U-shaped frame beam 58 can be moved to and fro on the rail 59. The eccentric drive 63 comprises an electric motor 64 attached to the outer wall of the shed 1 by means of a support 65. An arm 67 with an upright shaft 68 on its end is arranged on the drive shaft 66 of the electric motor 64. A pivotable drag link 69 embracing the upright shaft 68 is pivotably connected with an upright shaft 70 fitted on the U-shaped frame beam 58.

The operation of the longitudinal conveyor 8 is as follows:

When the electric motor 64 is energized, the eccentric drive 63 moves the U-shaped frame beam 58 to and fro along the rail 59 in the direction of the arrows 71 and 72 in Figure 8. When the U-shaped frame beam 58 is moved in the direction of the arrow 71, the carriers 61 will bear on the U-shaped frame beam 58 through the stops 62, and any manure and/or other dirt present in front of the carriers 61 is removed in the direction of the arrow 71. When the direction of motion by the U-shaped frame beam 58 is reversed and is in the direction of the arrow 72, the friction between the bottom of the manure channel 7 and the carriers 61 will cause the carriers 61 to rotate on the shaft 60 until the instant that they come to bear on the U-shaped frame beam 58. It will be obvious that the carriers 61 do not displace any manure when the U-shaped frame beam 58 moves in the direction of the arrow 72 in Figure 8. Because the U-shaped frame beam 58 is then moved again in the direction of the arrow 71, the carriers 61 rotate and come again to bear on the U-shaped frame beam 58 through the stops 62, whereupon manure or other dirt is again pushed up in the direction of the arrow 71. In this way, the manure and/or dirt is stepwise driven up in one direction, towards the end of the manure channel 7, where it is caught in a receptacle 9 for subsequent transportation, for instance, to a manure storage space outside the shed.

The invention is not limited to what has been described hereinbefore, but it also extends to what is reflected in the drawings.

## Claims

1. A construction for automatically milking animals, such as cows, comprising a space where the animals are allowed to move about freely and a movable milking robot (14), characterized in that the construction comprises a number of resting boxes (6) which also serve as milking parlour, and in that the moveable milking robot (14) is disposed relocatably to the resting boxes and is capable of automatically milking an animal at choice, while the construction furthermore comprises a detection device suitable for deciding whether an animal to be milked is standing or lying.

2. A construction according to claim 1, characterized in that it comprises a device suitable for forcing automatically an animal-to-be-milked to get up.

3. A construction according to claim 2, characterized in that a positioning construction (40) is designed such that it enables the animal-to-be-milked to be arranged in the midst of the positioning construction (40) and that it obstructs any sideward as well as any rearward movement of the animal.

4. A construction according to claim 2 or 3, characterized in that the positioning construction (40) comprises a tripod (43, 44) swivelable in a vertical plane.

5. A construction according to claim 4, characterized in that the tripod (43, 44) is disposed relocatably near a resting box (6).

6. A construction according to any one of the preceding claims, characterized in that it comprises a computer and process control system, through which the milking robot (14) is automatically moved to an animal to be milked.

7. A construction according to claim 6, characterized in that the computer comprises a memory in which is kept up to date a record of the times when the animals have been milked by the milking robot (14), such that, on account of these data, the milking robot (14) is automatically moved to an animal belonging to a herd and being the animal milked by the milking robot (14) the longest time ago.

8. A construction according to any one of the preceding claims, characterized in that it comprises a transmitter (46) and receiver suitable for detecting the presence of a cow in a box.

9. A construction according to claim 8, characterized in that the transmitter (46) is mounted on a collar attached to an animal.

10. A construction according to any one of the preceding claims, characterized in that it comprises a concentrates dispensing system (18), through which the animals can be individually given concentrates, while there are also provided signalling means which serve to draw the attention of an animal to the supply of concentrates.

11. A construction according to claim 10, characterized in that the concentrates dispensing system (18) and the signalling means are placed near the resting boxes (6).

12. A construction according to any one of the preceding claims, characterized in that the milking robot (14) is movable along a robot line (13) provided in a shed (1).

13. A construction according to claim 12, characterized in that the robot line (13) comprises a beam (15) mounted above and near the front of the resting boxes (6).

14. A construction according to claim 12 or 13, characterized in that the robot arm (14) is attached to the beam (15) in such a way that, with respect to the robot line (13), it is movable both in a horizontal plane and in a vertical plane.

15. A construction according to any one of claims 12 to 14, characterized in that the robot arm comprises a robot head (31) equipped with teat cups (32) and also comprises a sensor (33) which enables to determine the positions of the teats of an animal to be milked.

16. A construction according to any one of the preceding claims, characterized in that in the longitudinal direction of the shed (1) two rows of resting boxes (6) are provided, with these rows being at a certain distance from each other and having a feeding passage in between them.

17. A construction according to claim 16, characterized in that the two rows of resting boxes (6) are approachable by at least one milking robot (14).

18. A construction according to any one of the preceding claims, characterized in that it comprises a manure channel (7) for manure removal provided near the rear side of the resting boxes.

19. A construction according to any one of the preceding claims, characterized in that on the floor of the shed (1) there is provided a cross conveyor (11) which serves to carry off the manure to a manure channel (7) at the rear of the resting boxes and also a longitudinal conveyor (8) which serves to carry off manure from the manure channel (7) in one direction.

## Patentansprüche

1. Vorrichtung zum automatischen Melken von Tieren, wie z. B. Kühen, mit einem Raum, in dem sich die Tiere frei bewegen können, und mit einem bewegbaren Melkroboter (14),
dadurch gekennzeichnet, daß die Vorrichtung mehrere Ruheboxen (6) aufweist, die auch als Melkstand dienen, und daß der bewegbare Melkroboter (14) zwischen den Ruheboxen verschiebbar und geeignet ist, ein gewünschtes Tier automatisch zu melken, wobei die Vorrichtung ferner eine Detektionseinrichtung aufweist, mittels der festzustellen ist, ob ein zu melkendes Tier steht oder liegt.

2. Vorrichtung nach Anspruch 1,
gekennzeichnet durch eine Vorrichtung, mittels der ein zu melkendes Tier automatisch zum Aufstehen zu zwingen ist.

3. Vorrichtung nach Anspruch 2,
dadurch gekennzeichnet, daß eine Positioniervorrichtung (40) derart ausgebildet ist, daß sie eine Positionierung des zu melkenden Tieres in der Mitte der Positioniervorrichtung (40) ermöglicht und jede Seitwärts- und Rückwärtsbewegung des Tieres verhindert.

4. Vorrichtung nach Anspruch 2 oder 3,
dadurch gekennzeichnet, daß die Positioniervorrichtung (40) eine dreiarmige Haltevorrichtung (43, 44) aufweist, die in einer vertikalen Ebene schwenkbar ist.

5. Vorrichtung nach Anspruch 4,
dadurch gekennzeichnet, daß die dreiarmige Haltevorrichtung (43, 44) nahe einer Ruhebox (6) verschiebbar angeordnet ist.

6. Vorrichtung nach einem der vorhergehenden Ansprüche,
dadurch gekennzeichnet, daß die Vorrichtung einen Computer und ein Programmsteuerungssystem aufweist, von dem der Melkroboter (14) automatisch zu einem zu melkenden Tier bewegt wird.

7. Vorrichtung nach Anspruch 6,
dadurch gekennzeichnet, daß der Computer einen Speicher aufweist, in dem eine Aufzeichnung darüber auf dem neuesten Stand gehalten wird, wie oft die Tiere von dem Melkroboter (14) gemolken werden, derart, daß der Melkroboter (14) aufgrund dieser Daten automatisch zu dem Tier einer Herde bewegt wird, das von dem Melkroboter (14) am längsten nicht mehr gemolken wurde.

8. Vorrichtung nach einem der vorhergehenden Ansprüche,
dadurch gekennzeichnet, daß die Vorrichtung einen Sender (46) und einen Empfänger aufweist, um die Anwesenheit einer Kuh in einer Box zu ermitteln.

9. Vorrichtung nach Anspruch 8,
dadurch gekennzeichnet, daß der Sender (46) an einem Halsband befestigt ist, das an einem Tier angebracht ist.

10. Vorrichtung nach einem der vorhergehenden Ansprüche,
dadurch gekennzeichnet, daß die Vorrichtung eine Fütterungsvorrichtung (18) für Kraftfutter aufweist, über die die Tiere einzeln mit Kraftfutter zu versorgen sind, wobei außerdem eine Anzeigevorrichtung vorhanden ist, die dazu dient, ein Tier auf die Zufuhr von Kraftfutter aufmerksam zu machen.

11. Vorrichtung nach Anspruch 10,
dadurch gekennzeichnet, daß die Fütterungsvorrichtung (18) für Kraftfutter und die Anzeigevorrichtung nahe den Ruheboxen (6) angeordnet sind.

12. Vorrichtung nach einem der vorhergehenden Ansprüche,
dadurch gekennzeichnet, daß der Melkroboter (14) entlang einer in einem Stall (1) angeordneten Roboterführung (13) verschiebbar ist.

13. Vorrichtung nach Anspruch 12,
dadurch gekennzeichnet, daß die Roboterführung (13) einen Balken (15) aufweist, der über und nahe der Vorderseite der Ruheboxen (6) angeordnet ist.

14. Vorrichtung nach Anspruch 12 oder 13,
dadurch gekennzeichnet, daß der Roboterarm (14) an dem Balken (15) derart angeordnet ist, daß er in bezug auf die Roboterführung (13) sowohl in einer horizontalen als auch in einer vertikalen Ebene bewegbar ist.

15. Vorrichtung nach einem der Ansprüche 12 bis 14,
dadurch gekennzeichnet, daß der Roboterarm einen mit Zitzenbechern (32) versehenen Roboterkopf (31) und ferner einen Sensor (33) aufweist, mittels dessen die Positionen der Zitzen eines zu melkenden Tieres zu ermitteln sind.

16. Vorrichtung nach einem der vorhergehenden Ansprüche,
dadurch gekennzeichnet, daß in Längsrichtung des Stalles (1) zwei Reihen von Ruheboxen (6) vorgesehen sind, wobei diese Reihen einen bestimmten Abstand zueinander aufweisen und zwischen den Reihen ein Fütterungsgang angeordnet ist.

17. Vorrichtung nach Anspruch 16,
dadurch gekennzeichnet, daß die beiden Reihen von Ruheboxen (6) von mindestens einem Melkroboter (14) ansteuerbar sind.

18. Vorrichtung nach einem der vorhergehenden Ansprüche,
dadurch gekennzeichnet, daß die Vorrichtung eine nahe der Rückseite der Ruheboxen angeordnete Dungrinne (7) zum Abführen von Dung aufweist.

19. Vorrichtung nach einem der vorhergehenden Ansprüche,
dadurch gekennzeichnet, daß auf dem Boden des Stalles (1) ein Querförderer (11) angeordnet ist, der dazu dient, den Dung in eine an der Rückseite der Ruheboxen angeordnete Dungrinne (7) abzuführen, sowie ein Längsförderer (8), der dazu dient, Dung aus der Dungrinne (7) in einer Richtung abzuführen.

## Revendications

1. Dispositif de traite automatique d'animaux, tels que des vaches, comprenant un espace où les animaux sont autorisés à circuler librement, et un robot trayeur (14) mobile, caractérisé en ce que le dispositif comprend un certain nombre de stalles de repos (6) qui servent aussi de stalles de traite, et en ce que le robot trayeur mobile (14) est disposé de manière à être transféré entre les stalles de repos et est capable de traire automatiquement un animal, au choix, tandis que le dispositif comprend en outre un dispositif de détection approprié pour décider si un animal à traire est debout ou couché.

2. Dispositif selon la revendication 1, caractérisé en ce qu'il comprend un dispositif approprié pour forcer automatiquement un animal à traire à se lever.

3. Dispositif selon la revendication 2, caractérisé en ce qu'un dispositif positionneur (40) est conçu de manière à permettre que l'animal à traire soit disposé au milieu du dispositif positionneur (40) et qu'il fasse obstacle à tout mouvement latéral de l'animal ainsi qu'à tout mouvement de recul de l'animal.

4. Dispositif selon la revendication 2 ou 3, caractérisé en ce que le dispositif positionneur (40) comprend un trépied (43, 44) pouvant pivoter dans un plan vertical.

5. Dispositif selon la revendication 4, caractérisé en ce que le trépied (43, 44) est disposé de manière à être relocalisé prés d'une stalle de repos (6).

6. Dispositif selon l'une quelconque des revendications précédentes, caractérisé en ce qu'il comprend un ordinateur et un système de commande de processus par lequel le robot trayeur (14) est amené automatiquement jusqu'à un animal à traire.

7. Dispositif selon la revendication 6, caractérisé en ce que l'ordinateur comprend une mémoire dans laquelle est tenu à jour un enregistrement des moments ou les animaux ont été traits par le robot trayeur (14), de telle sorte que, d'après ces données, le robot trayeur (14) est amené automatiquement à un animal appartenant à un troupeau et étant l'animal trait par le robot trayeur (14) depuis le plus longtemps.

8. Dispositif selon l'une quelconque des revendications précédentes, caractérisé en ce qu'il comprend un émetteur (46) et un récepteur appropriés pour détecter la présence d'une vache dans une stalle.

9. Dispositif selon la revendication 8, caractérisé en ce que l'émetteur (46) est monté sur un collier attaché à un animal.

10. Dispositif selon l'une quelconque des revendications précédentes, caractérisé en ce qu'il comprend un système (18) distributeur de concentrés, au moyen duquel les animaux peuvent recevoir des concentrés individuellement, tandis que sont également prévus des moyens de signalisation qui servent à attirer l'attention d'un animal sur l'apport de concentrés.

11. Dispositif selon la revendication 10, caractérisé en ce que le système (18) distributeur de concentrés et les moyens de signalisation sont placés près des stalles de repos (6).

12. Dispositif selon l'une quelconque des revendications précédentes, caractérisé en ce que le robot trayeur (14) est mobile le long d'une voie de robot (13) prévue dans une étable (1).

13. Dispositif selon la revendication 12, caractérisé en ce que la voie de robot (13) comprend une poutre (15) montée au-dessus des stalles de repos (6) et prés de l'avant de celles-ci.

14. Dispositif selon la revendication 12 ou 13, caractérisé en ce que le bras de robot (14) est attaché a la poutre (15) de telle manière que, par rapport à la voie de robot (13), il est mobile à la fois dans un plan horizontal et dans un plan vertical.

15. Dispositif selon l'une quelconque des revendications 12 a 14, caractérisé en ce que le bras de robot comprend une tête de robot (31) équipée de godets de trayons (32) et comprend aussi un capteur (33) qui permet de déterminer les positions des trayons d'un animal à traire.

16. Dispositif selon l'une quelconque des revendications précédentes, caractérisé en ce que deux rangées de stalles de repos (6) sont prévues dans le sens longitudinal de l'étable (1), ces rangées étant à une certaine distance l'une de l'autre et ayant entre elles un passage d'alimentation.

17. Dispositif selon la revendication 16, caractérisé en ce que les deux rangées de stalles de repos (6) sont approchables par au moins un robot trayeur (14).

18. Dispositif selon l'une quelconque des revendications précédentes, caractérisé en ce qu'il comprend un caniveau à fumier (7) pour l'évacuation du fumier, prévu près du côté postérieur des stalles de repos.

19. Dispositif selon l'une quelconque des revendications précédentes, caractérisé en ce qu'il est prévu sur le plancher de l'étable (1) un transporteur transversal (11) qui sert à transporter le fumier jusqu'à un caniveau à fumier (7) à l'arrière des stalles de repos, et aussi un transporteur longitudinal (8) qui sert a évacuer le fumier du caniveau à fumier (7) dans une seule direction.
